**Europäisches Patentamt**

(19) **European Patent Office**

**Office européen des brevets**

(11) Numéro de publication: **0 006 802**
**B1**

(12) ## FASCICULE DE BREVET EUROPEEN

(45) Date de publication du fascicule du brevet: **20.10.82**

(51) Int. Cl.³: **G 21 C 1/02, F 22 B 1/06**

(21) Numéro de dépôt: **79400400.2**

(22) Date de dépôt: **18.06.79**

(54) **Chaudière nucléaire à métal liquide caloporteur.**

(30) Priorité: **23.06.78 FR 7818822**

(43) Date de publication de la demande:
**09.01.80 Bulletin 80/1**

(45) Mention de la délivrance du brevet:
**20.10.82 Bulletin 82/42**

(84) Etats contractants désignés:
**BE DE GB IT**

(56) Documents cités:
**DE - A - 2 346 868**
**FR - A - 2 083 482**
**FR - A - 2 179 839**
**FR - A - 2 246 942**
**GB - A - 985 463**
**GB - A - 985 464**

**NUCLEAR ENGINEERING INTERNATIONAL vol.
23, no. 272, juin 1978, pages 43—60.
"Construction of the world's first full-scale fast
breeder reactor" Chap. 3: Main safety features;
Chap. 4: Design and development of main
components.**

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(72) Inventeur: **Robin, Marcel
25, Avenue de l'Europe
F-92310 Sevres (FR)**

(74) Mandataire: **Mongrédien, André et al,
c/o Brevatome 25, rue de Ponthieu
F-75008 Paris (FR)**

Courier Press, Leamington Spa, England.

## Chandière nucléaire à métal liquide caloporteur

La présente invention a pour objet une chaudière nucléaire à métal liquide caloporteur.

De façon plus précise, la présente invention concerne une chaudière nucléaire d'un type intermédiaire entre le système classique à boucles de refroidissement et le système dit intégré.

On sait que les réacteurs nucléaires refroidis par un métal liquide, en particulier par du sodium liquide, ou par un mélange de sodium et de potassium, appartiennent à deux grands types de réacteurs. D'une part, on trouve les réacteurs à boucles tels que Enrico Fermi aux Etats-Unis et BN 350 en U.R.S.S., et d'autre part on trouve les réacteurs dits intégrés, tels que EBR2 aux Etats-Unis, PFR en Grande-Bretagne et Phénix en France. Le second type de réacteurs concerne les réacteurs dans lesquels le circuit primaire de refroidissement du métal liquide est entièrement compris dans la cuve de la chaudière nucléaire. Plus précisément, cela signifie que la protection neutronique du coeur, les pompes primaires et les échangeurs primaires sont implantés dans la cuve elle-même. Dans l'état actuel de la technique, une telle solution impose un double circuit de refroidissement pour chaque boucle d'échange, l'échangeur primaire dit intermédiaire étant associé à un échangeur secondaire ou générateur de vapeur qui réalise l'échange thermique entre le sodium secondaire non actif et l'eau ou la vapeur servant à actionner les turbines. En outre, le réacteur comprend une cuve externe dite "principale" et une cuve interne dite "primaire". Cette cuve interne qui contient effectivement le coeur du réacteur sert essentiellement à séparer le métal liquide "chaud" sortant du coeur du réacteur du métal liquide "froid" sortant des échangeurs et réintroduit à l'entrée du coeur par les pompes primaires. A titre d'exemple, on peut citer le réacteur français Phénix.

Dans le premier type de réacteurs à métal liquide caloporteur, c'est-à-dire les réacteurs à boucles, les protections neutroniques du coeur, les échangeurs intermédiaires et les pompes primaires sont à l'extérieur de la cuve interne du réacteur qui contient elle-même le coeur du réacteur.

Une variante du réacteur à boucles a fait l'objet des brevets britanniques numéros 985 463 et 985 464. Dans ce cas, la cuve principale ne contient que le coeur du réacteur; les protections neutroniques (blocs de graphite) sont extérieures à cette cuve et les échangeurs intermédiaires et la pompe primaire (et non le bloc échangeur-pompe générateur de vapeur) sont logés dans une cuve auxiliaire raccordée à la cuve principale par une conduite avec tube coaxial. Des tuyauteries de faible diamètre relient l'orifice de refoulement de la pompe au sommier en passant par l'espace annulaire des tubes coaxiaux. Aucun réservoir de stockage de sodium et d'argon n'est prévu et il est évident qu'à moins d'augmenter considérablement les dimensions des réservoirs auxiliaires, la réserve de caloporteur froid est nettement moindre que pour un réacteur semi-intégré dont l'inertie thermique est très supérieure. Le mode de supportage de la cuve principale et des cuves auxiliaires est également différent et plus traditionnel, puisque ces capacités sont suspendues à la dalle générale de protection biologique.

L'invention concerne plus particulièrement ce premier type de réacteur à métal liquide caloporteur, mais dans lequel le circuit secondaire de métal liquide est supprimé, c'est-à-dire des réacteurs dans lesquels l'échange thermique est effectué directement entre le métal liquide radioactif ayant traversé le coeur et de l'eau sous forme liquide puis vapeur.

L'organisation générale d'un tel circuit de refroidissement a déjà été décrite dans le brevet FR—A—2 379 881 déposé le 4 février 1977 au nom du demandeur pour "Bloc pompe-échangeur". Ce brevet décrit en particulier un bloc échangeur-pompe permettant l'échange thermique direct entre le métal liquide primaire et l'eau.

En parvenant ainsi à l'échange direct entre le métal liquide et l'eau, on réalise une double économie substantielle (pouvant atteindre par exemple 40% du prix de l'énergie produite) d'une part sur la construction (en diminuant la quantité d'acier et de béton nécessaires ainsi qu'en supprimant une partie des dispositifs de mesure et de contrôle de l'installation) et d'autre part, pendant l'exploitation, par suppression de la puissance de pompage nécessair pour le métal liquide du circuit secondaire.

Le but essentiel de la présente invention est de réaliser pratiquement un tel échange direct sans sacrifier pour autant la sécurité de la chaudière nucléaire qui demeure aussi grande que dans les chaudières à circuit réfrigérant intermédiaire.

A cet effet, la chaudière nucléaire objet de l'invention, rendue plus compacte du fait de l'absence d'un circuit de métal liquide secondaire, comprend un réservoir de stockage de ce métal liquide utilisable pour le remplissage de l'installation et pour recueillir, en cas de rupture dans la paroi de l'échangeur, les produits actifs et l'hydrogène issus de la réaction de ce métal liquide avec l'eau et dont on empêche ainsi l'entrée dans la cuve primaire du réacteur. Pour éviter toute explosion de cet hydrogène, le réservoir de stockage est rempli d'un gas inerte.

De préférence, l'invention concerne des réacteurs dits semi-intégrés, dans lesquels on trouve, à l'intérieur de la cuve principale, une cuve primaire servant d'une part à supporter le coeur du réacteur et les matériaux absorbeurs neutroniques nécessaires pour assurer la protection de la cuve principale, du bloc échangeur-pompe et des conduites de liaison vis-à-vis du rayonnement neutronique de coeur et, d'autre part, à isoler le métal liquide chaud sortant du coeur du réacteur par rapport au métal liquide froid entrant dans la cuve principale.

D'une façon générale, la présente invention concerne un réacteur du type semi-intégré qui permet de réaliser une grande compacité de la chaudière nucléaire, c'est-à-dire de l'ensemble de l'installation jusqu'à la sortie de la vapeur produite.

Plus précisément, l'invention a pour objet une chaudière nucléaire comportant:

— une cuve (2) contenant le coeur (36) du réacteur, le métal liquide de refroidissement, et une couverture de gas inerte;
— au moins un échangeur de chaleur (4) extérieur à ladite cuve (2) pour réaliser un échange thermique entre ledit métal liquide et un fluide secondaire;
— des moyens de liaison (42, 44) pour faire communiquer dans un sens et dans l'autre ladite cuve (2) et le ou lesdits échangeurs de chaleur (4);
— un réservoir de stockage de gaz inerte (86) relié à ladite cuve (2);
— ledit réservoir étant muni d'une conduite (9) faisant communiquer la partie supérieure de la cuve avec le réservoir; et
— une enceinte (10) constituée de cellules (12, 14, 16, 18) à atmosphère contrôlée contenant lesdist éléments de ladite chaudière, et assurant la protection biologique du personnel d'exploitation ainsi que la protection de la chaudière contre les missiles d'origine externe, caractérisée en ce que:
— la chaudière comporte un réservoir de stockage (6) apte à recevoir le métal liquide et le cas échéant, les produits de réaction de ce métal liquide avec le fluide secondaire au sein de l'échangeur (4);
— le réservoir (6) est muni d'un ensemble de conduites consistant au moins en:
— une première conduite de trop-plein (74—60) faisant communiquer la partie supérieure de la cuve (2) avec le fond dudit réservoir (6);
— au moins une deuxième conduite (88) d'équilibrage de pression faisant communiquer la partie supérieure de la cuve (2) avec la partie supérieure du réservoir de stockage (6),
— une troisième conduite (60) pour le remplissage en métal liquide dudit réservoir (6), cette conduite (60) débouchant d'une part à l'extérieur de l'enceinte (10) et d'autre part, dans ledit réservoir principal (6);
— une quatrième conduite (76, 62, 72) faisant communiquer l'intérieur dudit réservoir (6) avec la cuve (2), cette conduite étant munie de moyens (66) de mise en circulation du métal liquide,

lesdites conduites étant munies de vannes de telle façon qu'en fonctionnement normal, ledit réservoir de stockage (6) soit en liaison avec ladite cuve (2) par les première (74, 60) et deuxième (88) conduites,

— chaque échangeur de chaleur (4) comporte une enveloppe externe (4a) dans laquelle circule ledit métal liquide, l'enveloppe (4a) étant munie d'une enveloppe de sécurité et une conduite de décharge (92) apte à communiquer avec l'intérieur de l'enveloppe (4a) par un organe d'obturation (90) apte à s'ouvrir brusquement en cas de surpression anormale dans l'enveloppe (4a), la conduite de décharge (92) débouchant à la partie supérieure du réservoir de stockage (6), les moyens (44) de mise en communication dans le sens échangeur-cuve étant munis d'un organe de fermeture (94) apte à être fermé en cas de chute de pression anormale dans l'enveloppe (4a) consécutive à l'ouverture brutale de l'organe d'obturation (90).

En cours de fonctionnement, du fait que le réservoir de stockage est en communication permanente avec la cuve aussi bien en ce qui concerne le métal liquide que le gaz inerte, on réalise ainsi l'équivalent d'un réservoir d'expansion qui permet de maintenir une pression sensiblement constante de la couverture gazeuse pour les différents régimes de fonctionnement du réacteur.

Le brevet britannique GB—A—985 463 décrit un réacteur nucléaire, refroidi par métal liquide, et du type à boucles. Ce réacteur comporte un réservoir 54 de gaz de couverture du métal liquide de la cuve du réacteur, en communication avec l'atmosphère gazeuse de cette cuve. Ce réservoir 54 ne sert toutefois qu'à contrôler la pression régnant dans cette atmosphère, et ne remplit aucune des deux fonctions essentielles du réservoir de stockage de la présente invention, lequel assure le confinement du métal liquide de la chaudière lors de son remplissage et le stockage des produits actifs et de l'hydrogène en cas de réaction accidentelle du métal liquide sur l'eau dans l'échangeur.

L'article "Construction of the world's full-scale fast breeder reactor" publié pages 43 et suivantes dans le no. 272 de Juin 1978 de la revue Nuclear Engineering, décrit le réacteur français Superphénix de Creys-Malville. La Fig. 6, page 48, de cet article, montre qu'il est connu de prévoir des réservoirs de stockage de sodium dans un réacteur refroidi par ce métal. Ces réservoirs jouent pour le sodium inactif du circuit secondaire un rôle analogue à celui du réservoir de stockage de sodium primaire actif de la présente invention. Il est néanmoins évident que la nature des problèmes posés et des risques encourus du point de vue de la sûreté lorsqu'il s'agit du sodium primaire radioactif ne permet pas, pour l'Homme de l'Art, une simple transposition de solutions d'un domaine dans l'autre. Dans le cas du réacteur Superphénix, on n'a pas à craindre le rejet de produits radioactifs dans l'atmosphère, puisque c'est précisément pour éviter ce problème que, dans ce réacteur, comme dans tous ceux en construction ou en fonctionnement aujourd'hui, on a prévu un circuit de sodium secondaire.

On comprend qu'ainsi le réservoir de stockage permet le remplissage initial de la cuve du réacteur en métal liquide et la réalisation de la couverture gazeuse dans la cuve du réacteur.

Selon une autre caractéristique importante de la chaudière nucléaire, objet de l'invention, l'échangeur de chaleur ou chaque échangeur de chaleur comporte une enveloppe externe dans laquelle circule ledit métal liquide radioactif ladite enveloppe étant munie d'une enveloppe de securité et, une conduite de décharge apte à communiquer avec l'intérieur de laidite enveloppe externe par un organe d'obturation apte à s'ouvrir brusquement en cas de surpression anormale dans ladite enveloppe, ladite conduite de décharge débouchant à la partie supérieure dudit réservoir de stockage principal, et les moyens de mise en communication dans le sens échangeur-cuve sont munis d'un organe de fermeture apte à être fermé en cas de chute de pression anormale dans ladite enveloppe consécutive à l'ouverture brutale desdits organes d'obturation qui commande également la chute des barres de sécurité du coeur du réacteur et l'arrêt de la pompe associée à l'échangeur défectueux. Une surpression dans l'enveloppe externe de l'échangeur se produirait en particulier dans le cas d'une réaction sodium-eau violente dans l'échangeur de chaleur. En outre, selon l'invention, la rupture de l'organe d'obturation commande l'interruption de la liaison entre l'échangeur de chaleur et la cuve du réacteur dans le sens correspondant à l'entrée du métal liquide dans la cuve. Ainsi, l'hydrogène produit par la réaction sodium-eau est directement entraîné dans le réservoir de stockage et, plus précisément, dans sa partie contenant l'argon. On comprend qu'ainsi il n'existe aucun risque que de l-hydrogène soit entraîné dans le métal liquide (sodium) et traverse le coeur du réacteur en quantité significative.

Selon une autre caractéristique de la chaudière nucléaire objet de l'invention, on trouve au moins un échangeur de chaleur dite résiduelle à l'intérieur de la cuve du réacteur. Cet échangeur a pour but de maintenir un refroidissement du sodium même en cas d'arrête de la totalité des pompes servant à la mise en circulation du métal liquide de refroidissement. De tels échangeurs de chateur font cependant déjà parti de l'état de la technique, voir nottamment FR—A—2 083 482 ou DE—A—2 346 868.

On comprend immédiatement l'intérêt d'une telle chaudière nucléaire à neutrons rapides refroidie par métal liquide quant aux avantages qu'elle présente et qui sont liés à un accroissement très sensible de la compacté des installations aussi bien par rapport à un réacteur intégré dans lequel la cuve présente un volume très important et nécessite donc en particulier des quantités de métal liquide (par exemple de sodium liquide) substantielles que par rapport à des réacteurs nucléaires à neutrons rapides du type à boucles. Dans ce deuxième type de réacteurs, l'étalement des installations impose d'avoir une enceinte bétonnée de très grand volume.

Il faut également souligner qu'une partie de la compacité obtenue grâce à la chaudière nucléaire de l'invention est liée au fait qu'on utilise un échangeur de chaleur direct entre le sodium ou métal liquide primaire, c'est-à-dire susceptible d'être activé, et l'eau ou la vapeur utilisée dans les turbines.

Dans le brevet FR—A—2 329 881 déjà citée, concernant les blocs pompe-échangeurs de chaleur à double paroi, on a montré que la probabilité de pénétration de l'eau dans le sodium primaire actif dans ces échangeurs est quasi négligeable, compte tenu de l'existence de tubes à double paroi. On rappelle que cette probabilité est de l'ordre de $10^{-7}$ ou $10^{-6}$ selon les hypothèses retenues. On comprend que même si l'on ne souhaite pas négliger cette probabilité pourtant très faible et si, par ailleurs, on veut tenir compte d'accidents, tels que des séismes, susceptibles d'entraîner une réaction violente entre l'eau et le sodium avec production d'hydrogène, les dispositions particulières qui sont prises permettent de s'affranchir de ces difficultés du fait que dès l'apparition d'une surpression dans l'échangeur de chaleur, l'hydrogène produit est évacué dans le réservoir de stockage principal en interdisant pratiquement l'introduction de cet hydrogène dans le circuit primaire, et en particulier en empêchant cet hydrogène de traverser le coeur, ce qui toutefois n'aurait pas d'effets inacceptables sur le plan de la sûreté comme l'a montré un calcul neutronique. En d'autres termes, tout en permettant l'accroissement de la compacité de la chaudière nucléaire à neutrons rapides par rapport aux réacteurs à boucles out intégrés connus, on maintient le même niveau de sûreté grâce aux dispositions particulières de l'invention.

De toute façon, l'invention sera mieux comprise à la lecture de la description qui suit d'un mode de réalisation de la chaudière nucléaire objet de l'invention, donné à titre d'exemple non limitatif. La description se réfères aux figures annexées sur lesquelles on a représenté:

— sur la fig. 1, une vue générale schématique de l'ensemble de la chaudière nucléaire en montrant les différentes parties et les différentes connexions relatives à la circulation du métal liquide et à la circulation du gaz inerte;

— sur les fig. 2 et 3, des coupes verticale et horizontale d'une exemple concret de réalisation de la chaudière nucléaire illustrant en particulier la compacité remarquable de cette installation;

— sur la fig. 4, une vue plus détaillée de la cuve de la chaudière nucléaire montrant en particulier l'implantation d'un échangeur de chaleur résiduelle.

Dans la description qui suit, on se référera à un réacteur nucléaire à neutrons rapides refroidi par un métal liquide du type semi-intégré. Cependant, il faut bien comprendre que l'ensemble des caractéristiques que l'on va décrire pourrait également s'appliquer à un réacteur nucléaire de type à boucles.

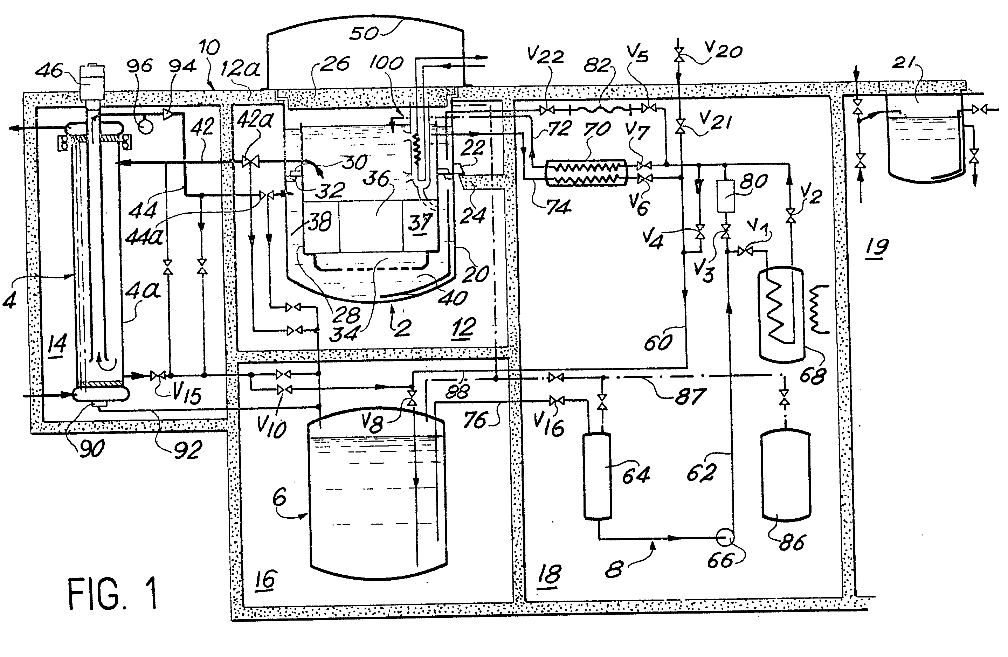

Si l'on se réfère à la fig. 1, on voit que la chaudière nucléaire comporte essentiellement une cuve portant la référence générale 2, un bloc pompe 46 échangeur de chaleur 4 entre le métal liquide circulant dans la cuve et le circuit d'eau-vapeur et un réservoir de stockage principal 6. On trouve également un ensemble de conduites pour le métal liquide et pour le gaz inerte portant la référence générale 8.

On voit par ailleurs que l'ensemble de ces éléments de la chaudière nucléaire est implanté dans une enceinte bétonnée portant la référence générale 10 et qui est constituée en fait par un certain nombre de cellules isolées les unes des autres. Cette enceinte assure d'une part la protection biologique du personnel d'exploitation et d'autre part la protection contre les atteintes éventuelles en provenance de l'extérieur. Par exemple, on trouve la cellule 12 dans laquelle est logée la cuve 2 de la chaudière nucléaire et qui est fermée à sa partie supérieure par une dalle 12a, une cellule 14 dans laquelle est logée le bloc pompe-échangeur de chaleur 4 (bien entendu, il y a dans l'ensemble de la chaudière autant de cellules 14 que d'échangeurs 4); une cellule 16 inférieure dans laquelle est logé le réservoir de stockage principal 6, une cellule 18 dans laquelle se trouve logé l'ensemble des conduites 8 et par exemple une cellule 19 dans laquelle est logée une cuve 21 pour le stockage des assemblages combustibles sous métal liquide lors du déchargement et du rechargement du coeur du réacteur nucléaire. Cette cuve de stockage 21 étant de type classique ne sera pas décrite plus en détail ultérieurement.

Dans la suite de la description, le métal liquide servant au refroidissement du coeur et à la transmission de l'énergie calorifique produite par les réactions de fission sera considéré comme étant du sodium liquide. Il va de soi que l'on ne sortirait pas du cadre de l'invention si le métal liquide utilisé était constitué par un autre corps tel que par exemple un mélange de sodium et de potassium ou un mélange de sels métalliques fondus.

Dans l'exemple particulier décrit, la cuve 2 est en fait constituée par une cuve principale externe 20 qui est supportée par des éléments de supportage externes 22 coopérant eux-mêmes avec des massifs de supportage 24 solidaires des parois bétonnées de la cellule 12. Cette cuve principale 20 est obturée à sa partie supérieure par une dalle en béton 26 qui repose de façon étanche sur le rebord supérieur de la cuve principale 20. Par ailleurs, la dalle supérieure 26 est munie d'un système d'étanchéité 50 avec la cloison en béton 12a. A l'intérieur de la cuve principale 20, on trouve une cuve primaire 28 qui est supportée par la cuve principale 20 par l'intermédiaire de dispositifs périphériques de supportage 30 qui coopèrent avec les éléments de supportage 32 fixés sur la paroi interne de la cuve principale 20. Il est important de souligner que les éléments de supportage 22 et 30, 32 sont disposés dans un même plan de supportage. La cuve primaire 28 est munie d'un fond 34 appelé en général sommier qui supporte le coeur 36 et les protections neutroniques latérales 37 tout en permettant la circulation du métal liquide à travers le coeur 36, dont les assemblages fissiles sont munis de protections neutroniques axiales. Les protections neutroniques latérales sont constituées d'assemblages amovibles de forme semblable à celle des assemblages combustibles du coeur, mais contenant un matériau absorbeur des neutrons (bore ou composés de bore) à la place de la matière fissile. Ces assemblages sont placés autour du coeur et sont positionnés dans le sommier comme des assemblages fissiles. Les dispositifs de manutention du combustible et du contrôle commande du réacteur qui sont d'un type bien connu n'ont pas été représentés pour simplifier la figure. En outre, les parois latérales de la cuve principale 20 et de la cuve primaire 28 définissent entre elles un espace annulaire 38 et les fonds un espaces inférieur 40. La circulation du sodium liquide entre la cuve 2 et chacun des échangeurs de chaleur 4 est assurée par l'intermédiaire d-une conduite de sortie 42 qui fait communiquer la partie supérieure de la cuve primaire avec l'entrée de l'échangeur de chaleur et par une conduite 44 qui fait communiquer la sortie de la pompe intégrée à ce même échangeur de chaleur avec l'espace annulaire 38 ménagé entre les deux curves. On comprend qu'ainsi la circulation du sodium liquide se fait de la façon suivante: il traverse le coeur 36 en s'échauffant et pénètre ainsi dans la partie supérieure de la cuve interne. Ce sodium chaud est repris par la conduite 42 et introduit ainsi dans l'échangeur de chaleur 4. Il en ressort refroidi par la conduite 44 qui réintroduit le sodium froid dans l'espace annulaire 38, grâce à la présence de la pompe de circulation 46 qui est associée à l'échangeur de chaleur 4. Les conduites 42 et 44 sont munies de vannes d'isolation 42*a* et 44*a* à doubles opercules qui permettent de séparer complètement un échangeur 4 de la cuve 2 en cas d'incident sur l'échangeur. De préférence, la pompe 46 est intégrée dans l'échangeur de chaleur. Il est important de noter que, par rapport à une chaudière nucléaire du type à boucles, le sodium froid est introduit dans la cuve 2 dans un espace de très grand volume puisqu'il s'agit de l'espace constitué par l'espace annulaire 38 et l'espace entre les fonds 40. On sait que, au contraire, dans le cas des reacteurs nucléaires à boucles, cet espace est très limité puisque le sodium froid doit être directement injecté à la base du coeur par l'intermédiaire de canalisations. On comprend qu'ainsi pour la sécurité on dispose d'un grand volume de sodium froid qui assure une inertie thermique convenable. Il faut préciser en outre que, pour des raisons de sûreté, la dalle supérieure 12*a* peut être surmontée par un dôme 50 constituant une deuxième enceinte de sécurité.

Le réservoir principal de stockage 6 a la même structure que la cuve principale 20. Le réservoir 6 a une capacité suffisante pour pouvoir contenir la totalité du sodium des cuves principale et primaire au-dessus du niveau du coeur 36, plus celui qui est normalement contenu dans les boucles d'extraction de chaleur, ou encore une fraction suffisante du volume de la cuve principale et des circuits de refroidissement pour permettre une inspection par caméra du dessus du coeur du réacteur. Il faut noter que ce réservoir peut être effectivement prévu car, par suite des dimensions plus faibles de la cuve principale, le volume nécessaire de sodium est réduit par rapport à celui qu'on trouve dans un réacteur intégré de puissance analogue.

Le réservoir principal 6 de stockage peut servir d'abord au remplissage initial de la cuve du réacteur en sodium. Le réservoir 6 est raccordé à la conduite 60 dénommée ci-apres par troisième conduite qui traverse la dalle supérieure 12*a* et sort donc à l'extérieur de l'enceinte bétonnée. Elle comporte les vannes $V_8$, $V_{21}$ et $V_{20}$, la vanne $V_{21}$ ayant pour but d'éviter toute remontée de sodium chaud au-dessus de la dalle 12*a* en cours de fonctionnement. On trouve également une conduite 76, 62, 72 dénommée ci-après par quatrième conduite qui fait partie du circuit de purification cu sodium. Cette quatrième conduite 76, 62, 72 comprend une vanne d'arrêt $V_{16}$, un réservoir d'amorçage de pompe 64, une pompe 66 et un piège froid de type classique 68. On trouve également un économiseur 70 monté sur les canalisations 72 et 74 qui débouchent à la partie supérieure de la cuve primaire et qui sont munies des vannes $V_7$ et $V_6$. Cette disposition élimine le risque de vidange accidentelle du métal liquide de la cuve principale.

Le remplissage initial de la cuve du réacteur se fait en quatre étapes principales: remplissage du réservoir principal 6; purification du sodium; remplissage de la cuve; et complementation du remplissage en sodium du réservoir 6.

Lors de la première étape, les vannes $V_{20}$, $V_{21}$, $V_8$ sont ouvertes et les vannes $V_4$, $V_5$, $V_6$ et $V_{10}$ sont fermées. Le sodium à une température de l'ordre de 150°C est introduit dans le réservoir 6 par la conduite 60 jusqu'à ce qu'il atteigne un niveau maximal dans ce réservoir, Pour la deuxième étape, (épuration du sodium), les vannes $V_1$, $V_2$, $V_4$, $V_8$ et $V_{16}$ sont ouvertes alors que les vannes $V_{21}$. $V_6$ et $V_7$ sont fermées. Le sodium est prélevé par la conduite 76, 62 sous l'effet de la pompe électromagnétique 66 qui refoule le sodium vers le piège froid 68. Le sodium retourne vers le réservoir 6 par la troisième conduite 60. Un indicateur 80 associé à la vanne $V_3$ permet de contrôler la purification du sodium. Lorsque la pureté du sodium liquide est suffisante, on passe à la troisième étape constituée par le remplissage de la cuve 2. Pour cela, on ferme la vanne $V_8$, ce qui interdit le retour de sodium vers le réservoir 6. On ouvre les vannes $V_5$ et $V_{22}$, ce qui met en service la conduite 82 de remplissage de la cuve. Lorsque le niveau maximal est atteint, on ouvre également les vannes $V_{10}$ et $V_{15}$ pour remplir les circuits annexes de l'installation. Dans une quatrième étape, on complète le remplissage du réservoir 6 en sodium après avoir épuré celui-ci.

Lorsque le chargement en sodium est treminé, on ouvre les vannes $V_7$ et $V_6$ de l'économiseur 70 ainsi que la vanne $V_8$ et on ferme les vannes $V_4$, $V_{10}$. $V_{15}$ puis $V_5$ et $V_{22}$. Cette situation correspond au fonctionnement normal du réacteur. Le système de purification fonctionne selon son régime usuel. Le sodium de la cuve 2 se déverse en trop-plein par la conduite 74, 60 dénommée ci-après par première conduite dans le réservoir 6 en traversant l'économiseur 70. Puis, la pompe dirige le sodium vers le piège froid 68 puis vers l'économiseur et enfin dans la cuve par la quatrième conduite 72. Il faut noter que les conduites 72 et 74 débouchent à l'extrémité supérieure de la cuve primaire 28 afin d'éviter un phénomène de siphonnage du sodium en cas de rupture de ce circuit. Dans le même but, la conduit 82 comporte, entre les vannes $V_5$ et $V_{22}$, une partie que l'on enlève après le premier remplissage de la cuve. Des tapes peuvent être mises en place pour parer à tout défaut éventuel d'étanchéité des vannes $V_5$ et $V_{22}$.

Comme on l'a déjà indiqué, on trouve dans la cuve au-dessus du niveau libre de sodium une couverture de gaz inerte réalisée par exemple en argon. Ce circuit d'argon comprend essentiellement le réservoir secondaire de stockage d'argon 86 qui est raccordé par la conduite 87 à la partie supérieure du réservoir principal 6 et à la cuve 2 par la conduite 88 dénommée ci-après par deuxième conduite.

La conduite 88 est de fort diamètre (par exemple 600 mm) et quadruplée de façon à assurer, même dynamiquement, un quasi équilibre des pressions d-argon entre la cuve 2 et le réservoir 6. Cette disposition vise à limiter la surpression dans la cuve principale 2 en cas d'excursion accidentelle de puissance dans le coeur. Elle permet également de limiter la pression d'argon dans la cuve principale lors de la montée du réacteur à sa puissance nominale. Le circuit d'argon peur également comporter un système d'épuration. On comprend qu'ainsi le réservoir 6 joue pour l'argon le rôle d'un réservoir limiteur de pression et pour le sodium le rôle de trop-plein.

Par ailleurs, il faut indiquer que toutes les cellules de l'enceinte bétonnée abritant les différents organes de l'installation sont mises sous atmosphère d-azote. Des vannes permettent d'interrompre cette alimentation en azote et de remplacer cet azote par de l'air pour permettre des interventions sur ces différents organes, après vidange du sodium.

Comme on l'a déjà indiqué, la chaudière nucléaire comprend également des circuits qui permettent d'assurer la sûreté de l'installation même en cas de réaction sodium-eau dans les échangeurs de chaleur, bien qu'une telle réaction n'ait qu'une probabilité extrêmement faible.

Une telle réaction accidentelle entraîne une surpression dans l'enveloppe externe 4a de l'échangeur de chaleur où circule le sodium liquide. De préférence, l'enveloppe 4a est doublée par une enveloppe de sécurité non représentée. L'enveloppe externe 4a comprend un organe d'obturation, tel que plusieurs membranes de sécurité 90 qui se rompent au bout de quelques dizaines de millisecondes après le pic de pression résultant de la formation d'hydrogène. Cette rupture entraîne, par l'intermédiaire de la coupure d'un circuit électrique, la chute des barres de sécurité du réacteur (non représentées) et l'arrêt de la pompe 46 associée à l'échangeur de chaleur défectueux. La rupture de la membrane de sécurité 90 met en communication l'intérieur de l'enveloppe 4a avec la conduite de décharge 92 qui débouche dans le réservoir de stockage principal 6, une soupape d'échappement non représentée permet de limiter la pression dans le réservoir 6 en cas de surpression due par exemple au fonctionnement de la conduite de décharge 92. Dans ce premier cas, les gaz s'échappant du réservoir 6 sont récupérés dans la cellule 16 qui est sous gaz inerte. On comprend qu'ainsi l'hydrogène est entraîné directement dans dans le réservoir de stockage 6. En outre, la conduite de sortie principale du sodium froid 44 est munie d'un clapet anti-retour 94. En cas de rupture des membranes de sécurité, le clapet anti-retour 94 se ferme sous l'effet de la pression de sodium dans le collecteur 38 et arrête la circulation de sodium empêchant en même temps l'introduction d'hydrogène dans le coeur du réacteur.

En outre, pour assurer la sûreté en cas de faibles fuites d'hydrogène, on peut prévoir sur la conduite 44 un détecteur d'hydrogène 96. Une telle détection d'hydrogène entraîne la chute des barres de sécurité, la vidange de l'eau de l'échangeur de chaleur et l'arrête de la pompe associée.

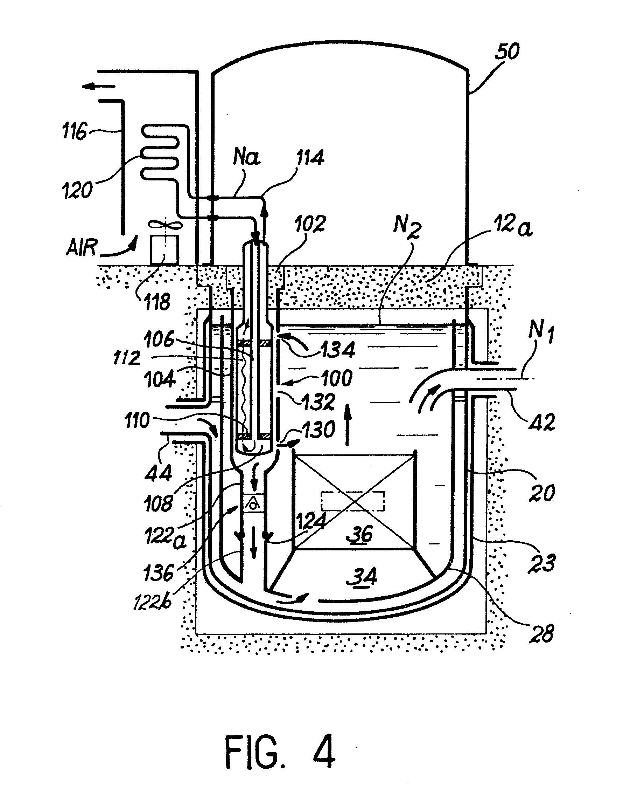

Comme on l'a déjà indiqué, la cuve de la chaudière nucléaire comporte au moins un échangeur de chaleur résiduelle 100 qui est représenté plus en détails sur la fig. 4. Cet échangeur a pour but d'évacuer la puissance résiduelle lorsque les circuits normaux d'extraction de chaleur sont indisponibles.

De préférence, l'installation complète comporte quatre échangeurs 100 de puissance résiduelle qui sont suspendus à des petits bouchons tels que 102 traversant de façon étanche la dalle 26.

L'échangeur 100 comprend une enveloppe externe 104 qui est directement suspendue au bouchon 102. Cette enveloppe a une résistance mécanique importante pour protéger les organes internes de l'échangeur 100 en cas d'excursion de puissance dans la cuve. Cet échangeur est bien sûr un échangeur sodium-sodium. Le sodium secondaire entre par la conduite 106 puis dans l'espace inférieur 108 limité par la plaque à tube 110 et traverse les tubes d'échange 112 pour ressortir par la conduite 114. L chaleur est extraite du sodium secondaire par un échangeur sodium-air de type classique, symbolisé par la cheminée 116, la soufflante 118 et les serpentins 120 faisant partie du circuit de sodium secondaire. L'enveloppe 104 se prolonge à sa partie inférieure par une conduite constituée par une première portion 122a solidaire de l'enveloppe 104 et par une deuxième portion 122b solidaire de la cuve primaire 28 et qui débouche au voisinage du sommier 34. La liaison entre les deux portions de conduite est assurée par un joint torique 124 semi-étanche qui constitue un élément rotulant et qui permet ainsi de compenser une certaine inclinaison de l'ensemble de l'échangeur 100, et de démonter celui-ci en le faisant sortir de l'orifice portant le bouchon 102.

L'enveloppe externe 104 comporte trois séries d'orifices. Des orifices de sortie 130 disposés immédiatement au-dessus du coeur 36, des premiers orifices d'entrée 132 disposés à une hauteur qui correspond au niveau résiduel $N_1$ du sodium dans la cuve primaire et des deuxièmes orifices d'entrée 134 disposés à une hauteur qui correspond au niveau nominal $N_2$ du sodium dans la cuve primaire. La conduite 122a, 122b est munie d'un clapet antiretour 136 qui est fermé lors du fonctionnement d'au moins un circuit de sodium principal.

Compte tenu de cette disposition des orifices et du fait que le clapet 136 est normalement fermé, en fonctionnement normal du réacteur, un faible débit de sodium primaire circule en permanence dans l'enveloppe 104 par la différence d'altitude des orifices d'entrée et de sortie.

Lorsque les circuits normaux de refroidissement ne fonctionnent plus, à l'entrée (inférieure) du coeur on ne retrouve plus la pression normale de refoulement des pompes. Cette baisse de pression assure l'ouverture du clapet 136. Dans ce cas, le sodium primaire après avoir traversé l'échangeur 100 est réinjecté à la partie inférieure du coeur par la conduite 122*a*, 122*b*. La double série d'orifice d'entrée permet d'assurer cette circulation même en cas de baisse du niveau de sodium. Il faut ajouter qu'au lieu d'avoir un clapet 136 qui s'ouvre automatiquement en cas de baisse de pression, on pourrait utiliser un obturateur commandé par un moteur lui-même commandé par un capteur de pression sensible à la pression régnant en 38.

Dans le cas où le réacteur n'est pas du type semi-intégré, mais du type à boucles, c'est-à-dire dans le cas où il n'y a pas de cuve primaire 28, la conduite 122*a*, 122*b* este directement reaccordée au sommier du coeur.

De plus, sur cette figure, on a représenté l'enveloppe de sécurité 23 qui double la cuve principale 20. Cette enveloppe sert à recueillir le sodium en cas de fuites dans la cuve principale. Le niveau inférieur $N_1$ correspond au cas d'une fuite à travers la paroi 20, le sodium remplissant la cuve 23.

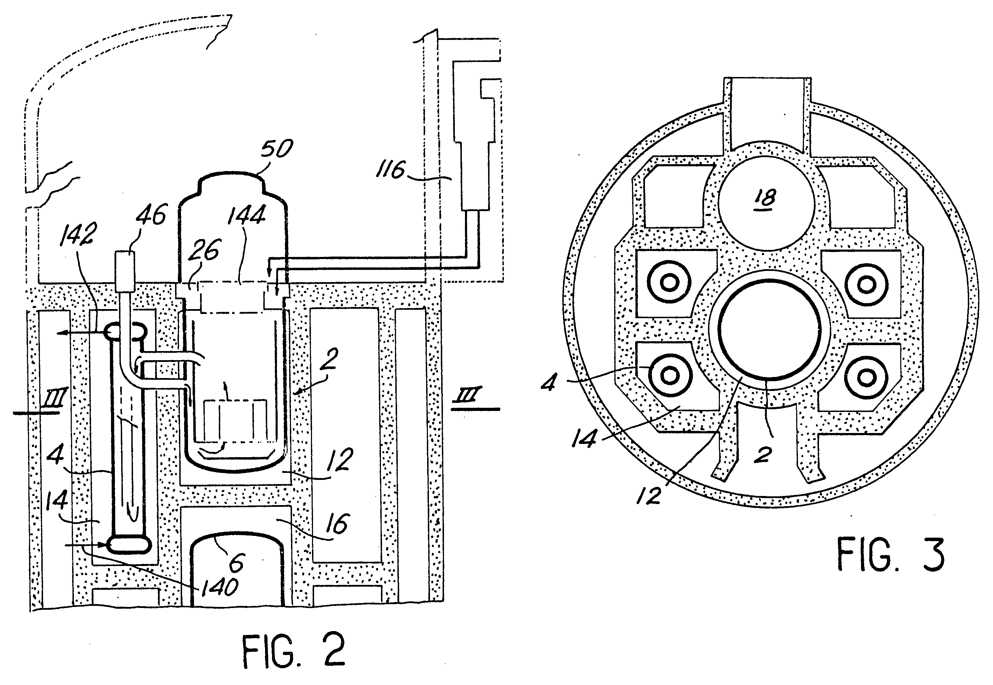

La fig. 1 ne représentait que schématiquement l'ensemble de la chaudière pour mieux en faire comprendre l'organisation et le fonctionnement. Sur les figures 2 et 3, on a représenté un mode concret de réalisation qui fait mieux ressortir la compacité de la chaudière nucléaire, cette compacité étant obtenue grâce aux caractéristique du réacteur objet de l'invention. On retrouve l'enceinte bétonnée contenant l'ensemble de la chaudière jusqu'aux conduites 140 et 142 d'entrée et de sortie de l'eau-vapeur des échangeurs 4. On y voit mieux les différentes cellules 12, 14, 16, 18 ménagées pour recevoir les différents composants de la chaudière et pour les isoler les uns des autres. On a également fait apparaître sur ces figures le bouchon tournant 144 monté dans la dalle 26 et qui permet les opérations de manutention des assemblages combustibles.

**Revendications**

1. Chaudière nucléaire à métal liquide caloporteur comprenant:

— une cuve (2) contenant le coeur (36) du réacteur, le métal liquide de refroidissement, et une couverture de gaz inerte;
— au moins un échangeur de chaleur (4) extérieur à ladite cuve (2) pour réaliser un échange thermique entre ledit métal liquide et un fluide secondaire;
— des moyens de liaison (42, 44) pour faire communiquer dans un sens et dans l'autre ladite cuve (2) et le ou lesdits échangeurs de chaleur (4);

— un réservoir de stoage de gaz inerte (86) relié à ladite cuve (2),
— ledit réservoir étant muni d'une conduite (87) faisant communiquer la partie supérieure de la cuve avec le réservoir; et
— une enceinte (10) constituée de cellules (12, 14, 16, 18) à atmosphère contrôlée contenant lesdits éléments de ladite chaudière, et assurant la protection biologique du personnel d'exploitation, ainsi que la protection de la chaudière coutre les missiles d'origine externe; caractérisée en ce que:
— la chaudière comporte un réservoir de stockage (6) apte à recevoir le métal liquide et le cas échéant, les produits de réaction de ce métal liquide avec le fluide secondaire au sein de l'échangeur (4);
— le réservoir (6) est muni d'un ensemble de conduites consistant au moins en:
— une première conduite de trop-plein (74, 60) faisant communiquer la partie supérieure de la cuve (2) avec le fond dudit réservoir (6);
— au moins de deuxième conduite (88) d'équilibrage de pression faisant communiquer la partie supérieure de la cuve (2) avec la partie supérieure du réservoir de stockage (6),
— une troisième conduite (60) pour le remplissage en métal liquide dudit réservoir (6), cette conduite (60) débouchant d'une part à l'extérieur de l'enceinte (10) et d'autre part, dans ledit réservoir principal (6);
— une quatrième conduite (76, 62, 72) faisant communiquer l'intérieur dudit réservoir (6) avec la cuve (2), cette conduite étant munie de moyens (66) de mise en circulation du métal liquide;

lesdites conduites étant munies de vannes de telle façon qu'en fonctionnement normal, ledit réservoir de stockage (6) soit en liaison avec ladite cuve (2) par les première (74, 60) et deuxième (88) conduites,

— chaque échangeur de chaleur (4) comporte une enveloppe externe (4a) dans laquelle circule ledit métal liquide, l'enveloppe (4a) étant munie d'une enveloppe de sécurité et une conduite de décharge (92) apte à communiquer avec l'intérieur de l'enveloppe (4a) par un organe d'obturation (90) apte à s'ouvrir brusquement en cas de surpression anormale dans l'enveloppe (4a), la conduite de décharge (92) débouchant à la partie supérieure du réservoir de stockage (6), les moyens (44) de mise en communication dans le sens échangeur-cuve étant munis d'un organe de fermeture (94) apte à être fermé en cas de chute de pression anormale dans l'enveloppe (4a) consécutive à l'ouverture brutale de l'organe d'obturation (90).

2. Chaudière selon la revendication 1, caractérisée en ce que ledit réservoir principal de stockage (6) comprend à sa partie supérieure une soupape d'échappement apte à s'ouvrir en cas de surpression dans ledit réservoir principal de stockage, de façon à permettre la décharge ils gaz et leur confinement dans la cellule (16) dont l'atmosphère normale est ade l'azote.

3. Chaudière selon l'une quelconque des revendications 1 et 2, caractérisée en ce qu'elle comprend au moins un échangeur auxiliaire de chaleur résiduelle (100) dispose a l'intérieur de ladit cuve, dans ledit métal liquide, ledit échangeur auxiliaire ayant une enveloppe externe (104) dans laquelle peut circuler ledit métal liquide, ladite enveloppe comportant au moins un premier orifice d'entrée (134), disposé à un premier niveau, légèrement au-dessous du niveau normal du métal liquide dans la cuve, au moins un deuxième orifice d'entrée (132) disposé à un deuxième niveau, légèrement au-dessous du niveau le plus faible occupé par le métal liquide dans la cuve correspondant au remplissage de l'enveloppe de sécurité par le métal liquide en raison de fuites dans ladite cuve, au moins un orifice de sortie (130) disposé immédiatement au-dessus du coeur du réacteur, et une conduite (122a, 122b) de mise en communication de la partie inférieure de ladite enveloppe avec la partie inférieure du coeur, ladite conduite étant munie de moyens d'obturation (136) aptes à n'être ouverte qu'en cas de chute de pression dans le cuve principale.

4. Chaudière selon l'une quelconque des revendications 1 à 3, caractérisée en ce que ladite cuve (2) comprend une cuve externe (20) dite principale, et une cuve interne coaxiale (28) dite primaire, ladite cuve principale comportant un fond, un rebord supérieur, des premiers moyens de supportage (22) solidaires de la périphérie de ladite cuve et de l'enceinte en béton, et une dalle supérieure (26) obturant ladite cuve et reposant sur ledit rebord périphérique, ladite cuve primaire (28) comportant un sommier (34) apte à supporter le coeur (36) de ladite coaudière nucléaire et la protection neutronique latérale (37) du coeur et à alimenter en métal liquide ladit coeur, des deuxièmes moyens de supportage (30, 32) consistant en des pièces solidaires de la périphérie de ladite cuve principale et en des pièces solidaires de ladite cuve primaire et reposant sur lesdites premières pièces, lesdites cuves délimitant entre elles un espace annulaire (38) communiquant avec un espace situé entre les fonds desdits cuves, lesdits moyens de liaison consistant en une première canalisation (42) pour relier l'entrée d'un échangeur (4) avec l'intérieur de la cuve primaire (28) dans une région disposée au-dessus du coeur (36) et une deuxième canalisation (44) pour faire communiquer la sortie de l'échangeur (4) avec l'espace annulaire (38) entre lesdites cuves, l'échangeur ou chaque échangeur comportant des moyens intégrés (46) de mise en circulation du métal liquide dans l'échangeur dans la cuve et dans lesdites conduites.

5. Chaudière selon les revendications 3 et 4, caractérisée en ce que ledit échangeur auxiliaire (100) est suspendu à ladite dalle supérieure, (102) et en ce que ladite conduite (122) de mise en communication de l'enveloppe externe (104) dudit échangeur auxiliaire consiste en une première portion de conduite solidaire de ladite enveloppe et en une deuxième portion de conduite (122a) solidaire de la cuve primaire (28), les deux portions de conduites étant raccordées par un joint rotulant (124).

6. Chaudière selon l'une quelconque des revendications 1 à 5, caractérisé en ce que ladite quatrième conduite est munie de moyens (68) de purification dudit métal liquide.

## Claims

1. Liquid metal-cooled nuclear reactor comprising:

— a tank (2) containing the reactor core (36), liquid metal coolant, and an inert gas atmosphere;

— at least one heat exchanger (4) external of said tank (2) to provide heat exchange between said liquid metal and a secondary fluid;

— connecting means (42, 44) providing communication in both directions between said tank (2) and said heat exchanger or exchangers (4);

— an inert gas-storage reservoir (86) connected to said tank (2);

— a conduit (87) providing communication between the upper part of said tank and said reservoir; and

— an enclosure (10) comprising cells (12, 14, 16, 18) having a controlled atmosphere containing the said reactor elements, and providing biological protection for reactor-service personnel, as well as protecting the reactor against missiles of external origin; characterized in that:

— the reactor has a storage reservoir (6) adapted to receive liquid metal and, should the occasion arise, products of reaction between liquid metal and secondary fluid within the exchanger (4);

— the reservoir (6) has a plurality of conduits comprising at least:—

— a first overflow conduit (74, 60) providing communication between the upper part of the tank (2) and the bottom of said reservoir (6);

— at least one second pressure-equilibrating conduit (88) providing communication between the upper part of the tank (2) and the upper part of the reservoir (6);

— a third circuit (60) for filling said reservoir (6) with liquid metal, said conduit (60) opening, on the one hand, externally of the enclosure (10) and, on the other hand, within the said principal reservoir; and

— a fourth conduit (76, 62, 72) providing communication between the interior of said reservoir (6) and the tank (2), said conduit being provided with circulation means (66) for said liquid metal;

said conduits having valves whereby, in normal operation, said storage reservoir (6) is connected to said tank (2) through the first (74, 60) and second (88) conduits;

— each heat exchanger (4) comprising an external shell (4a) within which the liquid metal circulates, the shell (4a) having a security envelope and a discharge conduit (92) communicating with the interior of the shell (4a) by a safety valve adapted to open rapidly in the event of an abnormal pressure rise within the shell (4a), said discharge conduit (92) opening into the upper part of the storage reservoir (6), the means (44) for providing communication in the direction from the exchanger to the tank having a closable safety valve (94) adapted to close in the event of an abnormal fall in pressure within the shell (4a) after the rapid opening of safety valve (90).

2. Reactor according to Claim 1 characterized in that the upper part of the said principal storage reservoir (6) has a safety valve adapted to open in the event of a pressure rise within said principal reservoir, whereby to allow discharge of gas and its confinement within cell (16) whose normal atmosphere is nitrogen.

3. Reactor according to either of Claims 1 and 2 characterized in that it comprises at least one auxiliary heat exchanger (100) for residual heat located in the liquid metal within the interior of said tank, said auxiliary exchanger having an external shell (104) within which liquid metal may circulate, said shell having at least one first inlet (134), disposed at a first level slightly below the normal level of liquid metal within the tank, at least one second inlet (132), disposed at a second level slightly below the lowest level of liquid metal in the tank, corresponding to filling of the security envelope by liquid metal resulting from leakage of the tank, at least one outlet (130) disposed immediately above the reactor core, and a conduit (122a, 122b) providing communication between the lower part of said shell and the lower part of said core, said conduit having closure means (136) adapted to open only in the event of a pressure drop in the principal tank.

4. Reactor according to any one of Claims 1 to 3 characterized in that said tank (2) comprises an external tank (20), herein called the main tank, and a coaxial internal tank (28), hereafter called the primary tank, said main tank having a bottom, an upper rim, first support means (22) unitary with the periphery of said tank and the concrete enclosure, and a lid (26) closing said tank and resting on said rim, said primary tank (28) comprising a support unit (34) adapted to support the core (36) of said nuclear reactor and the lateral neutron shielding (37) of the core, and to supply liquid metal to said core, second support means (30, 32) comprising first members unitary with the wall of the main tank, and second members unitary with said primary tank and resting on said first members, said tanks delimiting between them an annular space (38) communicating with a space located between the bottoms of said tanks, said connecting means comprising a first pipeline (42) connecting the inlet of an exchanger (4) with the interior of the primary tank (28) in a region above the core (36), and a second pipeline (44) connecting the outlet of the exchanger (4) with the annular space (38) between said tanks, the exchanger or each exchanger having integral means (46) for circulating liquid metal through said exchanger, said tank and said pipelines.

5. Reactor according to either of Claims 3 and 4 characterized in that said auxiliary exchanger (100) is suspended from said lid (102), and in that said conduit (122) communicating with the shell (104) of said auxiliary exchanger comprises a first conduit section unitary with said shell, and a second conduit section (122a) unitary with the primary tank (28), the two conduit sections being connected by a ball-and-socket joint (124).

6. Reactor according to any one of Claims 1 to 5 characterized in that said fourth conduit has purification means (68) for said liquid metal.

**Patentansprüche**

1. Flüssigmetallgekühlter Kernreaktor bestehend aus einem Behälter (2), welcher den Reaktorkern (36), das flüssige Metall zur Kühlung und eine Abdeckung aus Inertgas enthält, wenigstens einem Wärmetauscher (4) außerhalb des Behälters (2), um einen Wärmeaustausch zwischem dem flüssigen Metall und einem Sekundärfluid durchzuführen, Verbindungsmitteln (42, 44), um eine Verbindung in der einen und der anderen Richtung zwischen dem Behälter (2) und dem oder den Wärmetauschern zu schaffen, einen mit dem Behälter (2) verbundenen Vorratsbehälter (86) für das Inertgas, welcher mit einer Leitung (87) ausgerüstet ist, die den oberen Abschnitt des Behälters mit dem Vorratsbehälter verbindet, und einer Einschließung (10), welche von Kammern (12, 14, 16, 18) mit gesteuerter Atmosphäre gebildet ist, die die genannten Elemente des Kernreaktors enthält und den biologischen Schutz des Betriebspersonals sowie den Schutz des Kernreaktors gegenüber Raketen von außen sicherstellt, dadurch gekennzeichnet, daß der Kernreaktor einen Speicherbehälter (6) umfaßt, welcher zur Aufnahme von flüssigem Metall und im Bedarfsfall von Reaktionsprodukten dieses flüssigen Metalls mit dem Sekundärfluid innerhalb des Wärmetauschers (4) geeignet ist, daß der Speicherbehälter (6) mit einer Gesamtheit von Leitungen versehen ist, welche mindestens umfaßt eine erste Leitung (74, 60) zum Rückführen die den oberen Abschnitt des Behälters (2) mit dem Bodenbereich des Speicherbehälters (6) verbindet, wenigstens eine zweite Leitung (88) zum Druckausgleich, die den oberen Abschnitt des Behälters (2) mit dem oberen Abschnitt des Speicherbehälters (6) verbindet, eine dritte Leitung (60) zum Füllen des Speicherbehälters (6) mit flüssigem Metall, wobei diese Leitung (60) einerseits außerhalb der Einschließung (10) und andererseits in dem Hauptspeicherbehälter (6) mündet, sowie eine vierte Leitung (76, 62, 72), welche das Innere des Speicherbehälters (6) mit dem Behälter (2) verbindet, wobei diese Leitung mit Mitteln (66) zum Hervorrufen einer Zirkulation des flüssigen Metalls ausgerüstet ist und die genannten Leitungen mit Ventilen derart ausgerüstet sind, daß bei normaler Arbeitsweise der Speicherbehälter (6) mit dem Behälter (2) über die erste (74, 60) und die zweite (88) Leitung verbunden ist, daß jeder Wärmetauscher (4) einen äußeren Mantel (4a) aufweist, durch den das flüssige Metall strömt und der mit einem Sicherheitsmantel und einer Ausflußleitung (92) versehen ist, welche über eine Verschließeinrichtung (90), die sich im Falle eines anormalen Überdruckes plötzlich öffnen kann, mit dem Inneren des Mantels (4a) verbindbar ist, daß die Ausflußleitung (92) in den oberen Abschnitt des Speicherbehälters (6) mündet und die Mittel (44) zur Herstellung einer Verbindung in der Richtung Wärmetauscher-Behälter mit einem Schließelement (94) versehen sind, welches im Falle eines anormalen Druckabfalles in dem Mantel (4a) aufgrund der plötzlichen Öffnung der Schließeinrichtung (90) schließbar ist.

2. Kernreactor nach Anspruch 1, dadurch gekennzeichnet, daß der Hauptspeicherbehälter (6) an seinem oberen Abschnitt ein Ausströmventil aufweist, welches sich im Falle eines Überdrickes in dem Hauptspeicherbehälter öffnen kann, um das Ausströmen von Gasen und deren Einschließen in die Kammer (16) zu ermöglichen, deren normale Atmosphäre Stickstoff ist.

3. Kernreactor nach irgendeinem der Ansprüche 1 oder 2, dadurch gekennzeichnet, daß der Kernreaktor wenigstens einen Hilfswärmetauscher (100) für reastliche Wärme umfaßt, der im Inneren des Behälters in dem flüssigen Metall angeordnet ist und einen äußeren Mantel (104) aufweist, durch den das flüssige Metall strömen kann, und der wenigstens eine erste, auf einer ersten Höhe etwas unterhalb des Normalpegels des flüssigen Metalls in dem Behälter angeordnete Eintrittsöffnung (134), wenigstens eine zweite Eintrittsöffnung (132), welche auf einer zweiten Höhe etwas unterhalb des tiefsten Pegels angeordnet ist, welcher von dem flüssigen Metall in dem Behälter eingenommen wird und dem Füllen des Sicherheitsmantels mit flüssigem Metall wegen eines Lecks in dem Behälter entspricht, wenigstens eine unmittelbar oberhalbe des Reaktorkernes angeordnete Austrittsöffnung (130) und eine Leitung (122a, 122b) zur Verbindung des unteren Abschnittes des Mantels mit dem unteren Abschnitt des Kernes umfaßt, wobei diese Leitung mit Schließmitteln (136) ausgerüstet ist, die nur im Falle eines Druckabfalls in dem Hauptbehälter zu öffnen sind.

4. Kernreaktor nach einem der Ansprüche 1 bis 3, dadurch gekennzeichnet, daß der Behälter (2) einen äußeren Hauptbehälter (20) und einen inneren, mit dem ersten koaxialen Behälter (28) umfaßt, daß der Hauptbehälter einen Boden, einem oberen Rand, erste, fest mit dem Umfang des Behälters und der Einschließung aus Beton verbundene Stützmittel (22) und eine obere Abdeckung (26) aufweist, die den Behälter verschließt und auf dem Umfangsrang aufliegt, daß der erste Behälter (28) einen Querträger (34), der geeignet ist, den Kern (36) des Kernreaktors und die Neutronenabschirmung (37) des Kernes zu tragen und den Kern mit flüssigem Metall zu speisen, und zweite Stützmittel umfaßt, die aus fest mit dem Umfang des Hauptbehälters verbundenen Teilen und aus mit mit dem ersten Behälter fest verbundenen und sich auf den ersten Teilen abstützenden Teilen besteht, daß die Behälter zwischen sich einen Ringraum (38) begrenzen, der mit einem zwischen den Böden dieser Behälter gelegenen Raum in Verbindung steht, daß die Verbindungsmittel aus einem ersten Leitungssystem (42) zum Verbinden des Einganges eines Wärmetauschers (4) mit dem Inneren des ersten Behälters (28) in einem oberhalb des Kernes (36) angeordneten Bereich und ein zweites Leitungssystem (44) zur Verbindung des Ausganges des Wärmetauschers (4) mit dem Ringraum (38) zwischen den genannten Behältern umfaßt, und daß der Wärmetauscher oder jeder Wärmetauscher eingebaute Mittel (46) zum Erzeugen einer Strömung des flüssigen Metalls in dem Wärmetauscher, in dem Behälter und in den genannten Leitungen aufweist.

5. Kernreaktor nach den Ansprüchen 3 und 4, dadurch gekennzeichnet, daß der Hilfswärmetauscher (100) an der oberen Abdeckung (102) aufgehängt ist und daß die Leitung (122) zur Verbindung des äußeren Mantels (104) des Hilfswärmetauschers aus einem ersten, fest mit dem Mantel verbundenen Leitungsabschnitt und einem zweiten, fest mit dem ersten Behälter (28) verbundenen Leitungsabschnitt (122a) besteht, wobei die zwei Leitungsabschnitte über ein Kugelgelenk (124) verbunden sind.

6. Kernreaktor nach einem der Ansprüche 1 bis 5, dadurch gekennzeichnet, daß die vierte Leitung Mittel (68) zur Reinigung des flüssigen Metalls aufweist.

FIG. 1

FIG. 2

FIG. 3

0 006 802

FIG. 4